# EUROPEAN PATENT APPLICATION

(11) **EP 2 385 234 A2**
(43) Date of publication of application: **09.11.2011**
(21) Application number: 11156993.5
(22) Date of filing: 04.03.2011
(51) Int. Cl.: F02C 7/18

(54) **Gas turbine cooling configuration**

(30) Priority: 06.05.2010 US 775401
(71) Applicant: General Electric Company, Schenectady, NY 12345 (US)
(72) Inventor: Lacy, Benjamin Paul, Greenville, SC 29615 (US); Anand, Ashok Kumar, Niskayuna, NY 12345 (US); Chupp, Raymond Edward, Greenville, SC 29615 (US); Garcia-Crespo, Andres Jose, Greenville, SC 29615 (US); Gustafson, Ross James, Greenville, SC 29615 (US)
(74) Representative: Gray, Thomas

(57) **Abstract**

In one embodiment, a compressor discharge casing (129) of a gas turbine engine is designed to receive discharge air from a compressor (58) and to direct a first portion of the discharge air into a combustor (56) of the gas turbine engine and a second portion of the discharge air into a nozzle assembly (109) of a gas turbine to cool components of the gas turbine (64). A heat transfer device (138, 146, 150, 156) is configured to receive a cooling fluid and to cool the second portion of the discharge air with the cooling fluid.

## Description

### BACKGROUND OF THE INVENTION

The subject matter disclosed herein relates to a gas turbine engine and, more specifically, to systems for cooling components within the gas turbine engine.

In general, gas turbine engines employ combustors to combust a mixture of compressed air and fuel to produce hot combustion gases. The combustors may receive compressed air from a compressor and may combust the compressed air with fuel to produce the hot combustion gases. The combustion gases may flow through one or more turbine stages to generate power for a load and/or a compressor. Due to the high temperatures within the turbine, cooling fluid may be provided to the gas turbine to cool the hot gas path and/or components within the gas turbine engine.

### BRIEF DESCRIPTION OF THE INVENTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first embodiment, a system includes a gas turbine, a compressor, a combustor, a compressor discharge casing configured to receive discharge air from the compressor and to direct a first portion of the discharge air into the combustor and to direct a second portion of the discharge air into a nozzle assembly of the gas turbine to cool components of the gas turbine, and a heat transfer device configured to receive a cooling fluid and to cool the second portion of the compressor discharge air with the cooling fluid.

In a second embodiment, a system includes a gas turbine, a compressor, a combustor, a compressor discharge casing configured to receive discharge air from the compressor and to direct a first portion of the discharge air into the combustor and to direct a second portion of the discharge air into vanes of a nozzle assembly of the gas turbine, and a tube extending into the compressor discharge casing and configured to direct nitrogen into the compressor discharge casing proximate to the nozzle assembly to cool the second portion of the compressor discharge air.

In a third embodiment, a system includes a gas turbine, a compressor configured to produce discharge air and early stage extraction air, a combustor, a compressor discharge casing configured to receive the discharge air from the compressor and to direct a first portion of the discharge air into the combustor and to direct a second portion of the discharge air into a nozzle assembly of the gas turbine to cool components of the gas turbine, and a heat exchanger configured to receive a cooling fluid and to cool the compressor discharge air or the early stage extraction air with the cooling fluid.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a schematic flow diagram of an embodiment of an integrated gasification combined cycle (IGCC) system that may employ a cooling system for a gas turbine engine;
FIG. 2 is a sectional view of an embodiment of the gas turbine engine of FIG. 1 sectioned through the longitudinal axis;
FIG. 3 is a detailed view of a portion of the gas turbine engine of FIG. 2 taken within line 3-3 and depicting an embodiment of a cooling system;
FIG. 4 is a sectional view of a portion of the gas turbine engine of FIG. 2 depicting another embodiment of a cooling system;
FIG. 5 is a sectional view of a portion of the gas turbine engine of FIG. 2 depicting another embodiment of a cooling system;
FIG. 6 is a schematic diagram of an embodiment of a cooling system that includes a heat exchanger and that may be employed in the gas turbine engine of FIG. 1;
FIG. 7 is a schematic diagram of another embodiment of a cooling system that includes a heat exchanger and that may be employed in the gas turbine engine of FIG. 1; and
FIG. 8 is a schematic diagram another embodiment of a cooling system that includes a heat exchanger and that may be employed in the gas turbine engine of FIG. 1.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

The present disclosure is directed to cooling systems for gas turbine engines. Cooling systems may provide a cooling fluid to components within the hot gas path of the gas turbine engines to cool the components, thereby increasing the component life and/or allowing higher operating temperatures to exist within the gas turbine engine. A portion of the compressed air that is used for combustion within the gas turbine engine may be diverted from the compressor and used as a cooling fluid to cool the hot gas components. However, using the compressed air for cooling may decrease the amount of air available for combustion, which in turn may decrease the efficiency of the gas turbine engine and/or may increase emissions of the gas turbine engine. Accordingly, the present disclosure is directed to using another cooling fluid, such as nitrogen, to supplement and/or to replace the cooling provided by air diverted from the compressor. According to certain embodiments, the nitrogen may be injected into the compressor discharge casing to mix with the compressor discharge air, thereby cooling the compressor discharge air. The mixture of nitrogen and compressor discharge air may then be used as a cooling fluid. In other embodiments, the nitrogen may be directed through a heat exchanger to cool the compressor discharge air, thereby providing cooler compressor discharge air, which in turn may reduce the amount of compressor discharge air that is used for cooling.

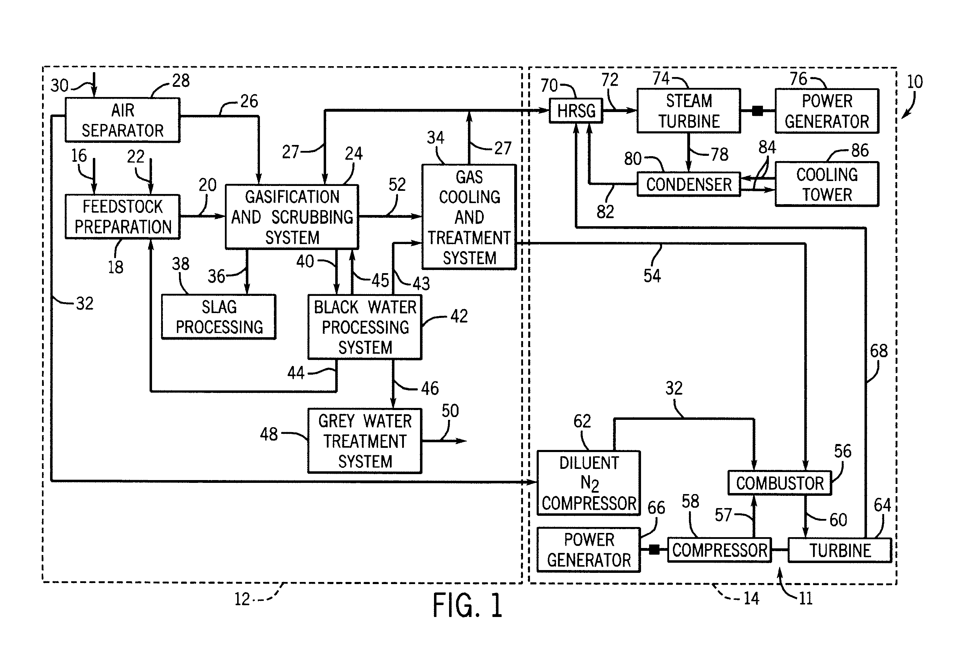

FIG. 1 illustrates an integrated gasification combined cycle (IGCC) system 10 that may include a cooling system for cooling components of a gas turbine engine 11. The IGCC system 10 includes a gasification system 12 integrated with a power generation system 14, which includes the gas turbine engine 11. Within the gasification system 12, a carbonaceous fuel source 16 may be utilized as a source of energy to produce syngas. The fuel source 16 may include coal, petroleum coke, biomass, wood-based materials, agricultural wastes, tars, coke oven gas and asphalt, or other carbon containing materials.

The fuel source 16 may be introduced into the gasification system 12 via a feedstock preparation system 18. The feedstock preparation system 18 may resize or reshape the fuel source 16, for example, by chopping, milling, shredding, pulverizing, briquetting, or palletizing the fuel source 16 to create a fuel slurry 20. According to certain embodiments, the feedstock preparation system 18 may include a grinding mill. Further, within the feedstock preparation system 18, additives 22, such as water, or other suitable liquids, may be added to the fuel source 16 to create the fuel slurry 20. However, in other embodiments, where no liquid additives are employed, the fuel source 16 may produce a dry feedstock.

From the feedstock preparation system 18, the fuel slurry 20 may be directed to a gasification and scrubbing system 24. The gasification and scrubbing system 24 may include a gasifier where the fuel slurry 20 may be mixed with oxygen 26 and steam 27 to produce syngas. The oxygen 26 may be provided by an air separator 28 that separates air 30 into oxygen 26 and nitrogen 32. The steam 27 may be recycled within the IGCC system 10 and may be provided from a downstream gas cooling and treatment system 34.

Within the gasification and scrubbing system 24, the gasifier may react the fuel slurry 20 with a limited amount of oxygen (e.g., partial oxidation) at elevated pressures (e.g. from absolute pressures of approximately 20 bar to 85 bar) and temperatures (e.g., approximately 700 °C to 1600 °C) to partially oxidize the fuel slurry 20 and produce syngas. Non-gasifiable ash material and unconverted and/or incompletely converted fuel slurry 20 may be byproducts of the process that may exist as larger particles of molten slag and smaller particles, referred to as fines.

The gasification and scrubbing system 24 also may include a cooler, such as a radiant syngas cooler or a quench unit. Within the cooler, the syngas may be cooled and saturated, causing less desirable components to solidify. In particular, the molten slag may be rapidly cooled and solidified into coarse particles of slag 36 that may be discharged from the gasification and scrubbing system 24 and provided to a slag processing system 38. The slag processing system 38 may include equipment such as a lockhopper, a drag conveyor, and/or a slag sump, among others. Within the slag processing system 38, the slag 36 may be screened to reduce moisture and then directed to disposal offsite. For example, the slag 36 may be used as road base or as another building material.

In addition to producing slag 36, the gasification and scrubbing system 24 also may produce black water 40 that includes fine particles of slag. The black water 40 may be removed from the syngas within the quench unit and/or within a scrubber of the gasification and scrubbing system 24. In particular, within the scrubber, additional fines and other entrained gases, such as hydrogen chloride, may be removed. The black water 40 may be discharged from the gasification and scrubbing system 24 and directed to a black water processing system 42.

The black water processing system 42 may include equipment such as flash drums, settling tanks, and condensers, among others that function to separate dissolved gases 43 and concentrate the fine particles. According to certain embodiments, the dissolved gases 43 may include syngas, which may be recovered in the gas cooling and treatment system 34. The black water processing system 42 also may include a settling process that produces separated fmes 44 and grey water 45 that may be reused in the gasification and scrubbing system 24. The black water processing system 42 also may produce a portion of grey water, referred to as grey water blowdown 46, that is blown down for treatment to remove less desirable components. The separated fines 44 may be recycled to the feed stock preparation system 14 where the fines may be used to provide additional fuel. The grey water blowdown 46 may be directed to a grey water treatment system 48 where the grey water blowdown 46 may undergo further processing to remove gases, such as ammonia, and solids to produce a treated discharge 50.

In addition to producing slag 36 and black water 40, the gasification and scrubbing system 24 also produces scrubbed syngas 52. The scrubbed syngas 52 may be directed to the syngas cooling and treatment system 34 where the syngas may be further purified to produce sweetened syngas 54.

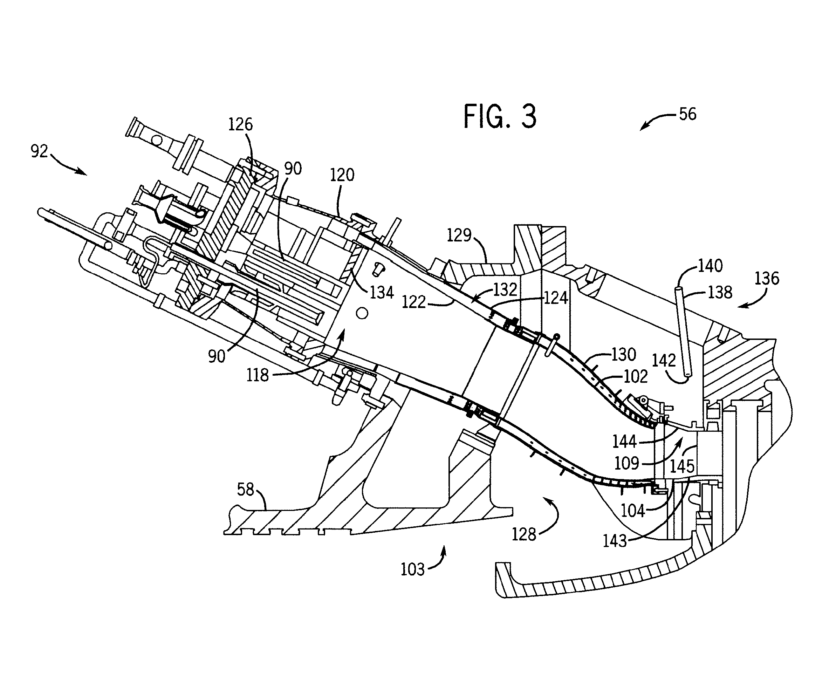

The sweetened syngas 54 may be used to generate power within the power generation system 14. In particular, the sweetened syngas 54 may be directed to a combustor section 56, where the sweetened syngas 54 may be combusted at a higher efficiency than the original carbonaceous fuel fed into the feedstock preparation system 18. Air 57 also may be provided to the combustor section 56 from a compressor 58 to mix with the sweetened syngas 54 in a fuel to air ratio that facilitates combustion of the sweetened syngas 54 to produce combustion gases 60. Nitrogen 32 may be provided to the combustor section 56 from the air separator 28 via a diluent nitrogen compressor 62 to cool the combustion reaction and to provide cooling for hot gas path components of the gas turbine engine. As described further below with respect to FIGS. 3 to 7, a portion of the nitrogen 32 may be used within a cooling system to provide cooling to the gas turbine engine 11.

The combustion gases 60 from the combustor section 56 may be directed to a gas turbine 64, which may drive the compressor 58 and/or an electrical generator 66. Exhaust 68 from the gas turbine 64 may then be fed to a heat recovery steam generation (HRSG) system 70, which may recover heat from the exhaust 68 and from the steam 27 received from the gas cooling and treating system 34. The recovered heat may be used to generate steam 72 for driving a steam turbine 74, which in turn may drive a generator 76 to generate electricity.

Discharge steam 78 from the steam turbine 74 may be directed through a condenser 80 where the steam 78 may be condensed to provide condensed steam 82. To condense the steam 78, a cooling fluid 84, such as water, may be circulated through the condenser 80 from a cooling tower 86. The condensed steam 82 from the condenser 80 may then be recycled to the HRSG system 70 where the condensed steam 82 may again be heated to generate the steam 72 for the steam turbine 74.

Within the IGCC system 10, nitrogen 32 from the air separator 28 may be used to cool components of the gas turbine engine 11. Further, in certain embodiments, early stage extraction air from the compressor 58 may be used as a cooling fluid for the gas turbine engine 11. Although the gas turbine engine 11 is depicted in the context of an IGCC system 10, the components of the IGCC system 10 are provided by way of example and are not intended to be limiting. For example, in certain embodiments, additional equipment such as valves, temperature sensors, pressure sensors, controllers, and/or storage tanks, among others, may be included within the IGCC system 10. Further, in other embodiments, the cooling systems described herein may be employed in other types of gas turbine engines. For example, the gas turbine engine 11 may be part of a standalone system that creates power to drive a generator 66 without the inclusion of a steam turbine 74. Further, in certain embodiments, the gas turbine engine 11 may receive nitrogen 32 from a separate supply that is not part of an IGCC system 10.

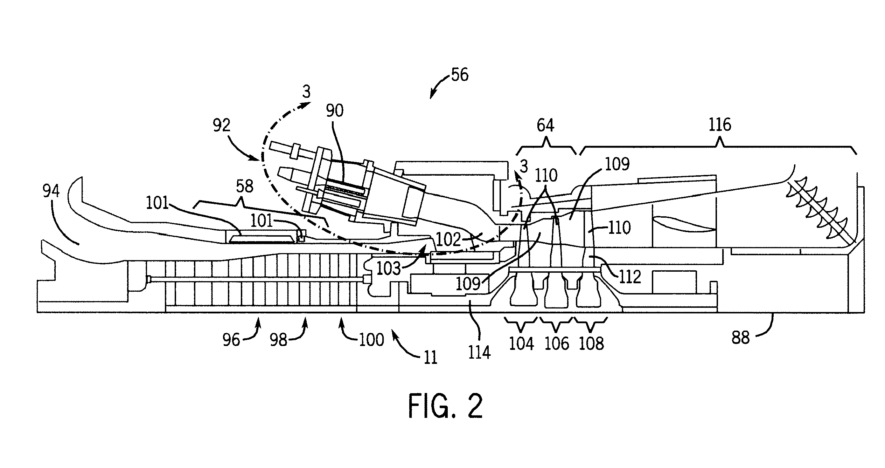

FIG. 2 is a cross-sectional side view of an embodiment of the gas turbine engine 11 of FIG. 1 taken along a longitudinal axis 88. As described further below, cooling systems may be employed within the gas turbine engine 11 to enhance the cooling provided to the gas turbine 64. For example, a cooling fluid may directed past and/or through hot gas path components, such as nozzles, vanes, shrouds, blades, and wheels, among others. The gas turbine engine 11 includes one or more fuel nozzles 90 located inside the combustor section 56. In certain embodiments, the gas turbine engine 12 may include multiple combustors 92 disposed in an annular arrangement within the combustor section 56. Further, each combustor 92 may include multiple fuel nozzles 90 attached to or near the head end of each combustor 92 in an annular or other arrangement.

Air may enter the gas turbine engine 11 through an air intake section 94 and may be compressed by the compressor 58. The compressor 58 may include a series of stages 96, 98, and 100 that compress the air. Each stage 96, 98, and 100 may include one or more sets of stationary vanes and blades that rotate to progressively increase the pressure to provide compressed air. As shown in FIG. 2, the compressor 58 includes approximately eight stages, with three stages 96, 98, and 100 labeled for clarity. However, in other embodiments, any number of stages may be included within the compressor 58. According to certain embodiments, air may be bled from the compressor stages 96, 98, and 100, for example through a bleed port 101, and used to cool components within the combustor 92 and/or within the gas turbine 64.

The compressed discharge air from the compressor 58 may exit the compressor 58 through a diffuser section 103 of the compressor 58 and may be directed into the combustor section 56 where the compressed air may be mixed with fuel. For example, the fuel nozzles 90 may inject a fuel-air mixture into the combustors 92 in a suitable ratio for optimal combustion, emissions, fuel consumption, and power output. As noted above, multiple combustors 92 may be annularly disposed within the combustor section 56. Each combustor 92 may include a transition piece 102 that directs the hot combustion gases from the combustor 92 to the gas turbine 64. In particular, each transition piece 102 may generally define a hot gas path from the combustor 92 to a nozzle assembly of the gas turbine 64, included within a first stage 104 of the gas turbine 64. A portion of the compressed discharge air from the compressor 58 also may be directed directly into the first stage 104 (i.e. through cooling passages in the first stage nozzles) to provide cooling for components of the gas turbine 64.

As depicted, the gas turbine 64 includes three separate stages 104, 106, and 108. Each stage 104, 106, and 108 may include a set of blades 110 coupled to a rotor wheel 112 that may be rotatably attached to a shaft 114. Each stage 104, 106, and 108 also may include a nozzle assembly 109 disposed directly upstream of each set of blades 110. The nozzle assemblies 109 may direct the hot combustion gases toward the blades 110 where the hot combustion gases may apply motive forces to the blades 110 to rotate the blades 110, thereby turning the shaft 114. The hot combustion gases may flow through each of the stages 104, 106, and 108, applying motive forces to the blades 110 within each stage 104, 106, and 108. The hot combustion gases may then exit the gas turbine 64 through an exhaust section 116.

Although the gas turbine 64 is illustrated as a three-stage turbine, the cooling systems described herein may be employed in any suitable type of turbine with any number of stages and shafts. For example, the cooling systems may be included in a single stage gas turbine or in a dual turbine system that includes a low-pressure turbine and a highpressure turbine.

FIG. 3 is a detailed view of the portion of the combustor section 56 shown within line 3-3 of FIG. 2 and depicts an embodiment of a cooling system that may be employed to cool gas turbine components. The combustor 92 includes a combustion chamber 118, which is generally defined by a casing 120, a liner 122, and a flow sleeve 124. The fuel nozzles 90 are attached to an end cover 126, near a head end of the combustor 92. Compressed fuel is directed through the end cover 126 to each of the fuel nozzles 90, which distribute the fuel to the combustion chamber 118. Any suitable combustible fuel may be employed in the fuel nozzles 90. However, according to certain embodiments, the fuel may include synthetic gas (syngas) or other highly reactive fuels (i.e. fuels with low methane and inert content), such as hydrogen, acetylene, and ethylene, or combinations thereof. Further, liquid and/or gas combustible fuels may be employed in the fuel nozzles 90.

Compressed discharge air from the compressor 58 may exit the compressor 58 through the diffuser section 103 and flow into a plenum 128 of a compressor discharge casing 129. The compressor discharge casing 129 may be an annular structure that surrounds the transition pieces 102 for each of the combustors 92, as well as a nozzle assembly 109 for the first stage 104 of the gas turbine 64. The plenum 128, which may be generally defined by the compressor discharge casing 129, may be an annular plenum surrounding the transition pieces 102 for each of the combustors 92, as well as the nozzle assembly 109 for the first stage 104.

The compressor discharge casing 129 may be designed to direct a first portion of the discharge air from the plenum 128 into the combustor 92, where the first portion may combine with the fuel to produce combustion gases. The compressor discharge casing 129 also may direct a second portion of the discharge air from the plenum 128 into the first stage 104 through the first stage nozzle assembly 109 where the second portion may be used to cool components of the gas turbine 64. Further, some of the second portion may be directed through the compressor discharge casing 129 to hot gas path components included within downstream (second stage, third stage, etc.) nozzle assemblies 109. The first portion of the discharge air may be directed to the combustor 92 through an impingement sleeve 130 of the transition piece 102. According to certain embodiments, the impingement sleeve 130 may include holes permitting the air to flow into an annular region 132 between the transition piece 102 and the impingement sleeve 130. The air may then flow toward the end cover 126 through the annular region 132 formed between the flow sleeve 124 and the liner 122. As the air reaches the end cover 126, the end cover 126 may direct the air back toward the combustion chamber 118 and the air may enter the combustion chamber 118 through the fuel nozzles 90 and through holes formed within a cap assembly 134.

Within the combustion chamber 118, the fuel and air may mix and combust to form combustion gases. The combustion gases may flow through the combustion chamber 118 and may flow through the transition piece 102 to enter the first stage 104 of the gas turbine 64. As the hot combustion gases flow through the first stage 104, components of the first stage 104, such as vanes of the nozzle assembly 109 and the blades 110 (FIG. 1), may absorb heat from the hot combustion gases. Accordingly, a cooling system 136 may be included to provide cooling to certain components of the gas turbine 64. For example, the cooling system 136 may be employed to cool components, such as vanes within the nozzle assembly 109, and/or blades 110, wheels 112, and/or shrouds of the gas turbine 64, among others.

The cooling system 136 may include a heat transfer device, such as a tube 138 that extends through the compressor discharge casing 129 into the plenum 128. The tube 138 includes an inlet end 140 that may be connected to a supply line to receive nitrogen 32 from a nitrogen supply, such as the air separator 28 as shown in FIG. 1. According to certain embodiments, the inlet end 140 may receive compressed nitrogen from the diluent nitrogen compressor 62 (FIG. 1). However, in other embodiments, the inlet end 140 may be connected directly to the air separator 28. Further, in other embodiments, the inlet end 140 may be connected to an independent nitrogen supply.

The nitrogen may enter the tube 138 through the inlet end 140 and may flow through the tube 138 into the plenum 128. The nitrogen may then be injected into the plenum 128 through an outlet end 142 of the tube 138. Within the plenum 128, the nitrogen may mix with the compressor discharge air in the plenum 128 to cool the discharge air within the plenum 128. According to certain embodiments, the tube 138 may be directed towards the nozzle assembly 109 of the first stage 104 to promote cooling of the second portion of the discharge air that enters the first stage 104 through the nozzle assembly 109. For example, the tube 138 may extend into the plenum 128 proximate to the nozzle assembly 109 and/or may be angled towards the nozzle assembly 109 to provide cooling to the second portion of the discharge air.

According to certain embodiments, the outlet end 142 of the tube 138 may be disposed proximate to the nozzle assembly 109 to direct the nitrogen into the nozzle assembly 109. In these embodiments, the nitrogen may mix with the second portion of the discharge air just prior to entering the nozzle assembly 109, and also may continue mixing with the second portion of the discharge air as the nitrogen flows into the nozzle assembly 109 with the second portion of the discharge air. Further, although only one tube 138 is shown in FIG. 3, in other embodiments, multiple tubes 138 may be disposed in an annular arrangement around the compressor discharge casing 129. For example, in certain embodiments, a tube 138 may be disposed at an annular position proximate to each of the transition pieces 102 housed within the compressor discharge casing 129.

The nozzle assembly 109 may include inner and outer bands 143 and 144 that connect the transition piece 102 to the first stage 104 of the gas turbine 64 to direct combustion gases from the transition piece 102 into the first stage 104. Vanes 145 may extend between the inner and outer bands 143 and 144 to direct the combustion gases through the blades 110 (FIG. 2). The outer band 144 may include holes or openings that allow the second portion of the discharge air to enter the interior of the vanes 145. The second portion of the discharge air may flow through the interior of the vanes 145 and may exit through cooling holes of the vanes 145. As the air flows through the vanes 145, the air may cool the vanes 145 and also may provide cooling to other components of the nozzle assembly 109 as the air flows through the nozzle assembly 109. According to certain embodiments, the tube 138 may be positioned so that the coolest air from the plenum 128, which has mixed with the nitrogen exiting the tube 138, enters the first stage 104 to provide cooling to components of the first stage nozzle 109 of the gas turbine 64.

Within the plenum 128, the nitrogen also may mix with the first portion of the discharge air, which is directed to the combustor 92 through openings within the impingement sleeve 130 of the transition piece 102. Nitrogen that enters the combustor 92 may be used as a diluent to reduce emissions produced in the combustion zone.

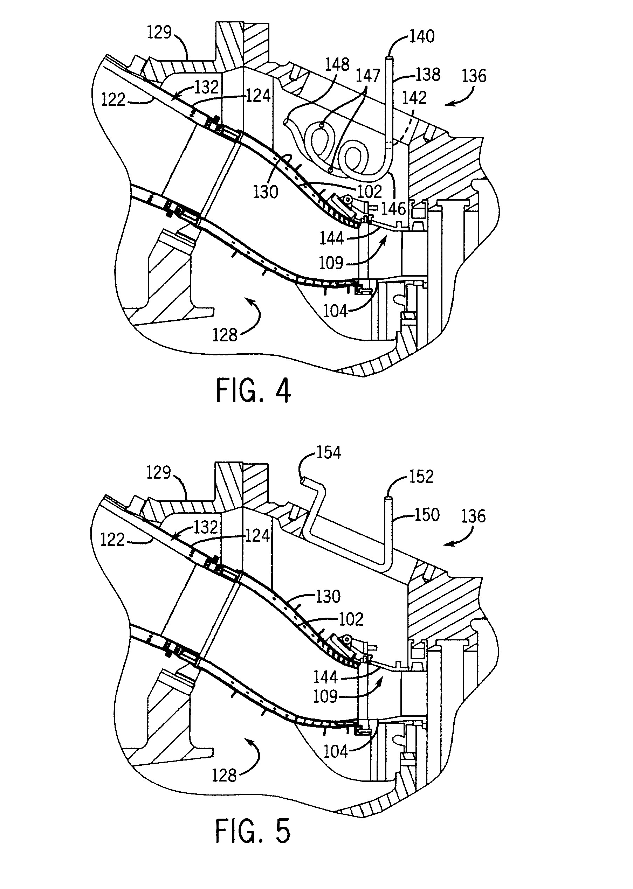

FIG. 4 depicts another embodiment of the cooling system 136. As shown in FIG. 4, the cooling system 136 includes the tube 138 and the inlet end 140 that may be connected to the air separator 28 and/or to the diluent nitrogen compressor 62 to receive nitrogen 32. The outlet end 142 of the tube 138 may be connected to a heat transfer coil 146 that is located within the plenum 128. The coiled shape may provide additional heat transfer area for exchanging heat between the discharge air within the plenum 128 and the nitrogen flowing within the heat transfer coil 146. However, in other embodiments, the heat transfer coil 146 may be replaced by a heat transfer device of another geometry, such as a straight tube, a multi-tube array, a radiator style heat exchanger, or a plate-fin heat exchanger, among others. Further, in certain embodiments, the tube 138 may be an integral part of the heat transfer coil 146. For example, the tube 138 may be one continuous piece with a coiled portion that forms the heat transfer coil 146 and a straight portion that extends into the plenum 128 through the compressor discharge casing 129. In other embodiments, all, or a portion of the tube 138 may be integral to the casing 129.

The nitrogen may flow through the tube 138 and enter the heat transfer coil 146 through the outlet end 142. The nitrogen may then flow through the heat transfer coil 146 and may cool the discharge air within the plenum 128 as the nitrogen flows through the heat transfer coil 146. The heat transfer coil 146 may be connected to the outlet end 142 of the tube 138 in an area of the plenum 128 that is proximate to the nozzle assembly 109 to promote cooling of the second portion of the discharge air with the nitrogen. However, rather than immediately discharging the nitrogen into the plenum 128 near the nozzle assembly 109, as shown in FIG. 3, the heat transfer coil 146 may extend through the plenum 128 to provide additional heat transfer surface area and/or residence time within the heat transfer coil 146 for cooling the compressor discharge air with the nitrogen.

The heat transfer coil 146 also may allow the nitrogen to be injected into the plenum 128 closer to the combustor 92, where the nitrogen may be used a diluent. For example, an outlet end 148 of the heat transfer coil 146 may be located towards the head end of the combustor 92. The nitrogen may exit the heat transfer coil 146 through the outlet end 148 and may mix with the air in the plenum 128. Further, in certain embodiments, the nitrogen may exit the heat transfer coil 146 through intermediate openings 147 along the length of the heat transfer coil 146. However, in other embodiments, the intermediate openings 147 may be omitted and the nitrogen may exit the heat transfer coil 146 solely through the outlet end 148. As the nitrogen mixes with the discharge air in the plenum 128, the nitrogen may provide further cooling to the discharge air. The nitrogen and air mixture may then enter the combustor 92 and/or the first stage 104 through the nozzle assembly 109. Further, in certain embodiments, some of the nitrogen and air mixture may be directed through the plenum 128 to downstream nozzle assemblies 109.

As shown, the heat transfer coil 146 extends within the plenum 128 from an area proximate to the first stage 104 towards the combustor 92 along the length of the transition piece 102. However, in other embodiments, the length and/or the geometry of the heat transfer coil 146 may vary. For example, in other embodiments, any number of coils may be included within the heat transfer coil 146. Further, in certain embodiments, the length of the heat transfer coil 146 may vary to dispose the outlet end 148 closer to the first stage 104 or closer to the head end of the combustor 92.

FIG. 5 depicts another embodiment of the cooling system 136. The cooling system 136 includes a heat transfer device, such as a heat exchanger 150 that may be disposed within and/or mounted to the compressor discharge casing 129. As shown, the heat exchanger 150 is piped through the compressor discharge casing 129. In this embodiment, the compressor discharge casing 129 may include internal passages that allow the discharge air from the plenum 128 to flow past the heat exchanger 150. In other embodiments, the heat exchanger 150 may be mounted inside of the compressor discharge casing 129 to promote flow of the discharge air past the heat exchanger 150. Further, in other embodiments, the heat exchanger 150 may be mounted outside of the compressor discharge casing 129. In these embodiments, the heat exchanger 150 may be a shell and tube heat exchanger that allows the nitrogen to flow through the tube side while the discharge air flows through the shell side. However, in other embodiments, any suitable type of heat exchanger may be employed.

The heat exchanger 150 includes an inlet end 152 that may be connected to a supply of a cooling fluid, such as nitrogen from the air separator 28 and/or the diluent nitrogen compressor 62 shown in FIG. 1. In other embodiments, early stage extraction air, for example, air bled from one of the compressor stages 96, 98, or 100 through a bleed port 101 as shown in FIG. 2, may be used as the cooling fluid that flows through the heat exchanger 150. After flowing through heat exchanger 150, the early stage extraction air may be directed back to the turbine for later stage (lower pressure) nozzle/hot gas path cooling. Moreover, in other embodiments, the cooling fluid may include other suitable fluids, such as water or fuel, that have a lower temperature than the temperature of the discharge air. The cooling fluid may flow through the heat exchanger 150 and may absorb heat from the discharge air within the plenum 128 to cool the discharge air. After flowing through the heat exchanger 150, the cooling fluid may exit the heat exchanger 150 through an outlet end 154. According to certain embodiments, the outlet end 154 may be connected to a supply line that directs the nitrogen to the combustor, for example, to reduce emissions within the combustor. In other embodiments, the outlet end 154 may be directed to other areas within the gas turbine engine 11 where nitrogen is desired or the nitrogen may be vented to the atmosphere.

As shown in FIG. 5, the heat exchanger 150 is mounted within the compressor discharge casing 129. However, in other embodiments, the heat exchanger may be mounted in other parts of the gas turbine engine 11 to provide cooling to downstream stages 106 or 108. For example, in certain embodiments, the heat exchanger 150 may be mounted within the shroud of the gas turbine 64 to provide cooling to the second or third stage 106 or 108 of the gas turbine 64.

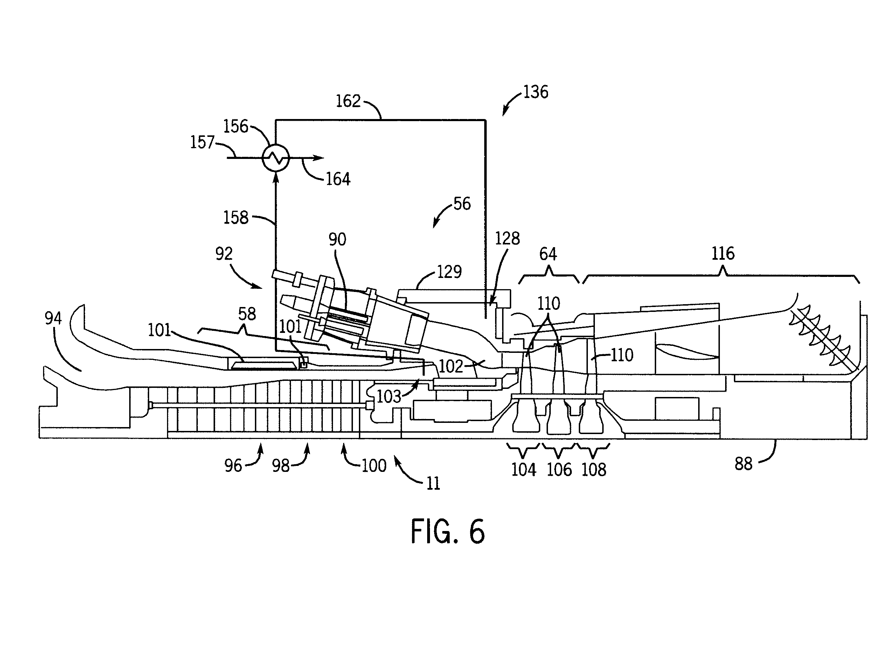

FIG. 6 is a schematic diagram of another embodiment of the cooling system 136. In this embodiment, the cooling system 136 includes a heat exchanger 156 that is external to the compressor discharge casing 129. According to certain embodiments, the heat exchanger 156 may be a shell and tube heat exchanger, a fin and tube heat exchanger, or other suitable type of heat exchanger. The heat exchanger 156 may employ a cooling fluid 157 to cool the compressor discharge air 158 that exits the compressor 58 through the diffuser section 103. According to certain embodiments, the cooling fluid 157 may be nitrogen 32 from the air separator 28 and/or from the diluent nitrogen compressor 62 shown in FIG. 1. However, in other embodiments, the cooling fluid may be early stage extraction air from the compressor 58. For example, early stage extraction air may be removed from the compressor 58 through one of the bleed ports 101 and provided to the heat exchanger 156. After flowing through heat exchanger 156, the early stage extraction air may be directed back to the turbine for later stage (lower pressure) nozzle/hot gas path cooling. Moreover, in other embodiments, the cooling fluid may include other suitable fluids, such as water or fuel, that have a lower temperature than the temperature of the discharge air.

According to certain embodiments, all, or a portion of, the compressor discharge air 158 may be directed through the heat exchanger 156 where the compressor discharge air 158 may be cooled by the cooling fluid 157 to produce cooled discharge air 162. In certain embodiments, the compressor discharge air 158 may be diverted to the heat exchanger 156 within the diffuser section 103. However, in other embodiments, the compressor discharge air 158 may be diverted to the heat exchanger 156 from the plenum 128.

The cooled discharge air 162 may then be directed to the plenum 128 where a first portion of the discharge air may enter the combustor 92 and a second portion of the discharge air may enter the first stage 104 to provide cooling, as described above with respect to FIG. 3. According to certain embodiments, the cooled discharge air 162 may be directed to the plenum 128 proximate to the nozzle assembly 109 of the first stage 104 to promote cooling of the second portion of the discharge air that enters the first stage 104. However, in other embodiments, the cooled discharge air 162 may directed to the plenum 128 at other suitable locations within the plenum 128. Further, in certain embodiments, the cooled discharge air 162 may be directed into the plenum 128 at multiple entry points. Moreover, in other embodiments, the cooled discharge air 162 may be plumbed directly to the first stage nozzle and/or to any other hot gas path components.

As the cooling fluid 157 flows through the heat exchanger 156, the cooling fluid 157 may absorb heat from the discharge air 158 to produce warmed cooling fluid 164. The warmed cooling fluid 164 may be employed within the gas turbine engine 11 or vented to the atmosphere. For example, in embodiments where the cooling fluid 164 is nitrogen 32, the nitrogen may be injected into the combustor 92 to act as a diluent and/or to reduce emissions. In other embodiments where the cooling fluid 164 is early stage extraction air from the compressor, the cooling fluid 164 may be provided to later stages 106 and/or 108 to provide cooling or for other purposes.

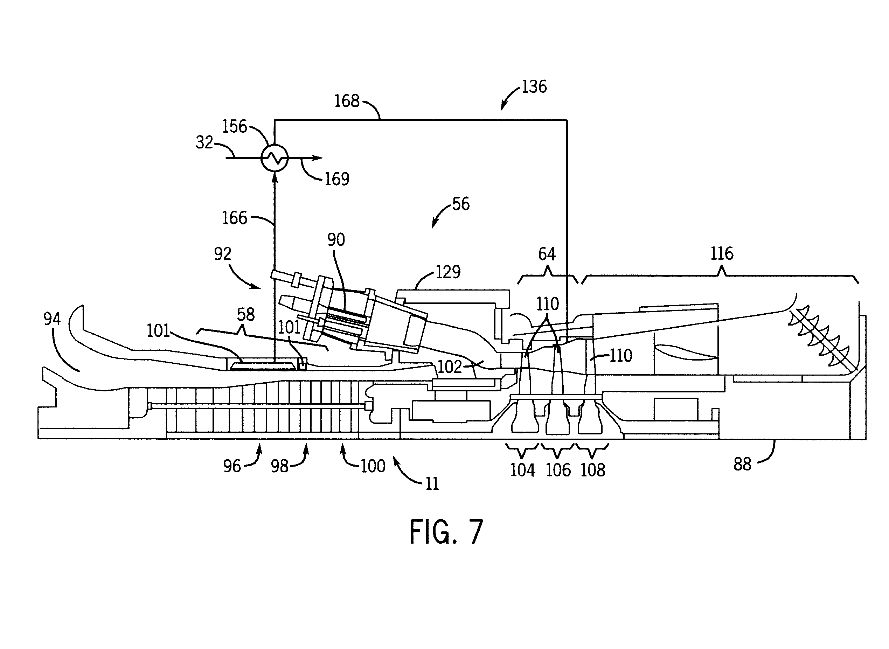

FIG. 7 is a schematic diagram of another embodiment of the cooling system 136 that includes the heat exchanger 156. In this embodiment, the heat exchanger 156 may receive nitrogen 32, which may be used to cool early stage extraction air 166 from the compressor 58. For example, the heat exchanger 156 may receive nitrogen 32 from the air separator 28 and/or from the diluent nitrogen compressor 62 shown in FIG. 1. In other embodiments, rather than nitrogen 32, another cooling fluid, such as water or fuel may be directed through the heat exchanger 156. The early stage extraction air 166 may be extracted from one of the compressor stages 96, 98, or 100 through one or more of the bleed ports 101.

The extraction air 166 may be directed through the heat exchanger 156 where the extraction air may be cooled by the nitrogen 32 to produce cooled early stage extraction air 168. The cooled early stage extraction air 168 may be used to cool other components within the gas turbine 64. For example, the early stage extraction air 168 may be directed to the second stage 106 and/or the third stage 108 of the gas turbine 64 to cool components within these stages 106 and 108. According to certain embodiments, the cooled early stage extraction air 162 may be directed through cooling circuits within components, such as vanes, shrouds, wheels, blades, and/or airfoils, of the second and third stages 106 and 108.

As the nitrogen 32 flows through the heat exchanger 156, the nitrogen 32 may absorb heat from the early stage extraction air 166 to produce warmed nitrogen 169. The warmed nitrogen 169 may be used as a source of nitrogen within the gas turbine engine 11. For example, in certain embodiments, the nitrogen may be injected into the combustor 92 to act as a diluent and/or to reduce emissions. Further, in certain embodiments, all or a portion of the warmed nitrogen 164 may be vented to the atmosphere.

In alternative embodiments, depending on the stage of the extraction air, the extraction air could instead be used to cool the nitrogen, which could then be used for other cooling purposes. For example, the extraction air may be used to cool nitrogen which may then be directed to tube 138, as described above with respect to FIGS. 3 and 4. In another example, the cooled nitrogen may be directed to other hot gas components and/or to downstream nozzle assemblies 109.

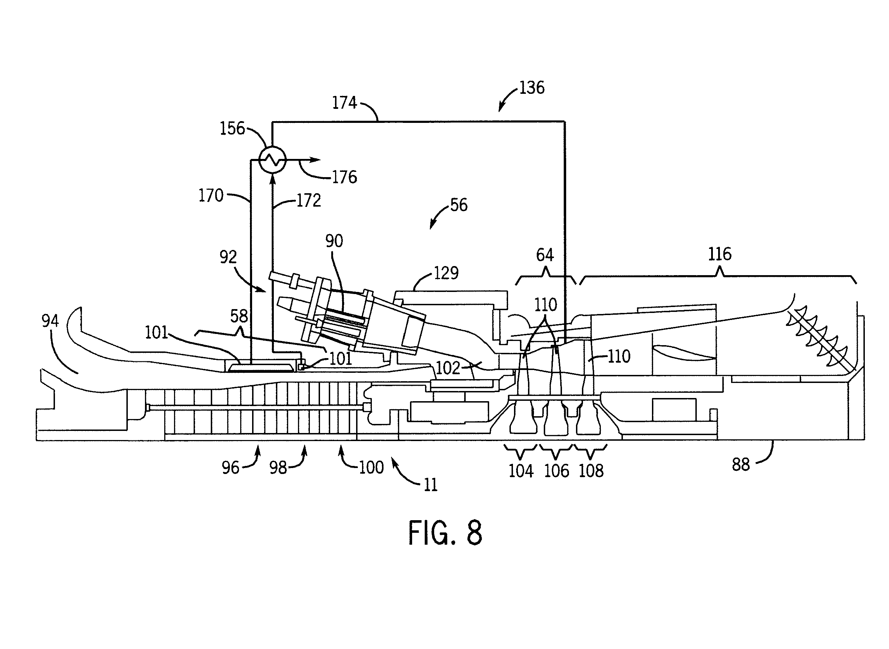

FIG. 8 is a schematic diagram of another embodiment of the cooling system 136 that includes the heat exchanger 156. In this embodiment, the heat exchanger 156 may employ early stage extraction air 170 as the cooling fluid. The early stage extraction air 170 may be used to cool downstream early stage extraction air 172, which may be withdrawn from a later stage than the early stage extraction air. For example, as shown, early stage extraction air 170 from the first stage 96 may be used to cool later stage extraction air 172 from the second stage 98. In other embodiments, the early and later stage extraction air may be withdrawn from other stages where the early stage extraction air is withdrawn from a stage upstream of the later stage extraction air. The early stage extraction air 170 and the later stage extraction air 172 may be withdrawn from the compressor 58 through bleed ports 101 that allow withdrawal of the extraction air upstream from the diffuser section 103.

As the early stage extraction air 170 flows through the heat exchanger 156, the early stage extraction air 170 may cool the later stage extraction air 172 to produce cooled later stage extraction air 174. The cooled later stage extraction air 174 may be used to cool components within the gas turbine 64. For example, the cooled later stage extraction air 174 may be directed to the second stage 106 or the third stage 108 of the gas turbine 64 to cool components within these stages 106 and 108. According to certain embodiments, the cooled later stage extraction air 174 may be directed through cooling circuits within components, such as vanes, shrouds, wheels, blades, and/or airfoils, of the second and third stages 106 and 108.

Within the heat exchanger 156, the early stage extraction air 170 may absorb heat from the later stage extraction air 172 to produce warmed early stage extraction air 176. The warmed early stage extraction air 176 may be used as a source of compressed air within the gas turbine engine 11. For example, according to certain embodiments, the warmed early stage extraction air 176 may be directed to the combustor 92, to the plenum 128, and/or to the first stage 104, or to other components and/or areas that may be cooled. Further, in certain embodiments, the warmed early stage extraction air 176 may be returned to the compressor 58.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

For completeness, various aspects of the invention are now set out in the following numbered clauses:
1. A system comprising:
   a gas turbine;
   a compressor;
   a combustor;
   a compressor discharge casing configured to receive discharge air from the compressor and to direct a first portion of the discharge air into the combustor and to direct a second portion of the discharge air into a nozzle assembly of the gas turbine to cool components of the gas turbine; and
   a heat transfer device configured to receive a cooling fluid and to cool the second portion of the discharge air with the cooling fluid.
2. The system of clause 1, wherein the heat transfer device comprises a tube extending into the compressor discharge casing and configured to inject the cooling fluid into the compressor discharge casing to cool the compressor discharge air.
3. The system of clause 1, wherein the heat transfer device comprises a heat exchanger configured to transfer heat from the compressor discharge air to the cooling fluid.
4. The system of clause 3, wherein the heat exchanger is disposed within the compressor discharge casing.
5. The system of clause 3, wherein the heat exchanger is disposed outside the compressor discharge casing.
6. The system of clause 1, comprising an air separator configured to provide nitrogen as the cooling fluid.
7. The system of clause 1, comprising bleed ports within the compressor configured to provide early stage extraction air from the compressor as the cooling fluid.
8. The system of clause 1, wherein the nozzle assembly comprises at least one outer band configured to direct the second portion of the discharge air into at least one vane of the nozzle assembly.
9. A system comprising:
   a gas turbine;
   a compressor;
   a combustor;
   a compressor discharge casing configured to receive discharge air from the compressor and to direct a first portion of the discharge air into the combustor and to direct a second portion of the discharge air into vanes of a nozzle assembly of the gas turbine; and
   a tube extending into the compressor discharge casing and configured to direct nitrogen into the compressor discharge casing proximate to the nozzle assembly to cool the second portion of the compressor discharge air.
10. The system of clause 9, wherein the tube comprises an outlet end disposed within the compressor discharge casing proximate to the nozzle assembly to inject the nitrogen into the compressor discharge casing proximate to the nozzle assembly.
11. The system of clause 9, wherein the tube is configured to mix the nitrogen with the first portion of the compressor discharge air and/or with the second portion of the compressor discharge air.
12. The system of clause 9, comprising a transition piece disposed within the compressor discharge casing and configured to direct combustion gases from the combustor into the nozzle assembly, wherein the tube extends within the compressor discharge casing along the transition piece from an area proximate to the nozzle assembly towards the combustor.
13. The system of clause 12, wherein the tube comprises a heat transfer coil configured to transfer heat between the compressor discharge air and the nitrogen within the heat transfer coil.
14. The system of clause 12, wherein the tube comprises an outlet end disposed within the compressor discharge casing proximate to the combustor to inject the nitrogen into the compressor discharge casing proximate to the combustor.
15. The system of clause 9, wherein the nozzle assembly comprises at least one outer band and wherein the tube extends into the compressor discharge casing proximate to the outer band.
16. A system comprising:
   a gas turbine;
   a compressor configured to produce discharge air and early stage extraction air;
   a combustor;
   a compressor discharge casing configured to receive the discharge air from the compressor and to direct a first portion of the discharge air into the combustor and to direct a second portion of the discharge air into a nozzle assembly of the gas turbine to cool components of the gas turbine; and
   a heat exchanger configured to receive a cooling fluid and to cool the compressor discharge air or the early stage extraction air with the cooling fluid.
17. The system of clause 16, wherein the early stage extraction air comprises a first portion withdrawn from an earlier stage of the compressor and a second portion withdrawn from a later stage of the compressor, wherein the cooling fluid comprises the first portion, and wherein the heat exchanger is configured to cool the second portion with the first portion.
18. The system of clause 16, wherein the cooling fluid comprises nitrogen and wherein the heat exchanger is configured to cool the early stage extraction air with the nitrogen.
19. The system of clause 16, wherein the nozzle assembly comprises a first stage nozzle assembly, and wherein the gas turbine comprises one or more later stage nozzle assemblies configured to receive the early stage extraction air to cool components of the one or more additional stages.
20. The system of clause 16, wherein the cooling fluid comprises nitrogen, wherein the heat exchanger is configured to cool the compressor discharge air with the nitrogen, and wherein the nitrogen is cooled by the early stage extraction air.

## Claims

1. A system (11) comprising:
a gas turbine (64);
a compressor (58);
a combustor (56);
a compressor discharge casing (129) configured to receive discharge air from the compressor (56) and to direct a first portion of the discharge air into the combustor and to direct a second portion of the discharge air into a nozzle assembly (109) of the gas turbine (64) to cool components of the gas turbine (64); and
a heat transfer device (138, 146, 150, 156) configured to receive a cooling fluid and to cool the second portion of the discharge air with the cooling fluid.

2. The system of claim 1, wherein the heat transfer device (138, 146) comprises a tube extending into the compressor discharge casing (129) and configured to inject the cooling fluid into the compressor discharge casing (129) to cool the compressor discharge air.

3. The system of claim 1, wherein the heat transfer device comprises a heat exchanger (150, 156) configured to transfer heat from the compressor discharge air to the cooling fluid.

4. The system of claim 3, wherein the heat exchanger (150) is disposed within the compressor discharge casing (129).

5. The system of claim 3, wherein the heat exchanger (156) is disposed outside the compressor discharge casing.

6. The system of any of the preceding claims, comprising an air separator (28) configured to provide nitrogen as the cooling fluid.

7. The system of any of the preceding claims, comprising bleed ports (101) within the compressor (58) configured to provide early stage extraction air from the compressor (58) as the cooling fluid.

8. The system of any of the preceding claims, wherein the nozzle assembly (109) comprises at least one outer band (144) configured to direct the second portion of the discharge air into at least one vane (145) of the nozzle assembly (109).
